# EUROPEAN PATENT SPECIFICATION

(11) **EP 3 057 828 B1**
(45) Date of publication and mention of the grant of the patent: **13.09.2017**
(21) Application number: 14790470.0
(22) Date of filing: 17.10.2014
(51) Int. Cl.: B23K 11/00, B29C 65/48, B32B 15/08, B32B 15/18, B32B 15/20, B60N 2/68, B32B 27/38, B29C 65/34, B32B 7/12, B29C 65/00, B29C 45/14, B29K 63/00, B29K 705/02, B29L 31/00

(54) **REINFORCEMENT FOR VEHICLE SEAT STRUCTURES AND COMPONENTS**
VERSTÄRKUNG FÜR FAHRZEUGSITZSTRUKTUREN UND -KOMPONENTEN
RENFORCEMENT POUR STRUCTURES ET ÉLÉMENTS DE SIÈGE DE VÉHICULE

(30) Priority: 18.10.2013 US 201361892958 P
(43) Date of publication of application: 24.08.2016
(73) Proprietor: Johnson Controls Technology Company, Milwaukee, WI 53209 (US)
(72) Inventor: HARRIS, Mark Anthony, West Bloomfield, Michigan 48323 (US); CLARK, Kenneth M., Rogersville, MO 65742 (US); SAKKINEN, Daniel J., Highland, Michigan 48357 (US)
(74) Representative: Liedhegener, Ralf
(86) International application number: PCT/US2014/061121
(87) International publication number: WO 2015/058077

(56) References cited:
- EP-A1- 0 450 166
- WO-A1-2014/163294
- WO-A2-2006/020974
- GB-A- 2 480 609
- JP-A- H04 343 806
- US-A- 3 360 423
- US-A- 6 059 369
- US-A1- 2007 267 543
- US-A1- 2010 320 816
- US-A1- 2013 257 131

## Description

### FIELD

The present application relates generally to reinforcement systems for vehicle seat structural members, such as, for example, a reinforcement member for a seat back.

### BACKGROUND

Seat structures, such as seat back frames, for vehicle seats are required to provide a certain level of structural support. Due to such requirements, they may be relatively heavy and may require a relatively high cost to manufacture. Otherwise, the seat structure may not be able to withstand the forces within the vehicle.
An aircraft seating system with a seat structure, which is attached to a support structure secured on the aircraft floor, the seat structure comprising a one-piece seat structure element with a plurality of seating areas, and wherein backrest portions are associated with the seating areas respectively, is known from the US 2007/0 267 543 A1 .
Several further types of vehicle seats with seat structures are known from GB 2480609 A, WO 2006020974 A2, EP 0450166 A1, US 6059369 A, US 2013257131 A1, JP H04343806 A, US 3360423 A, US 2010320816 A1 and WO 2014163294 A1, this latter document forming part of the state of the art pursuant to Article 54 (3) EPC.

### SUMMARY

The invention is defined by the method steps and technical features set forth in independent claim 1; additional method steps and technical features are disclosed in the dependent claims.

According to one feature of the invention, a method of reinforcing a vehicle seat structural member includes identifying a reinforcement region of the vehicle seat structural member based on an area of the vehicle seat structural member that will be subjected to higher operational stress than another area of the vehicle seat structural member and attaching a reinforcement member to the reinforcement region of the vehicle seat structural member. The reinforcement member includes at least one of structural epoxy, a plastic, a metallic member, and a composite member. The reinforcement member is configured to reinforce the vehicle seat structural member in the reinforcement region.

According to another feature of the invention, a reinforcement system for a vehicle seat structural member includes a vehicle seat structural member with a reinforcement region identified based on an area of the vehicle seat structural member that will be subjected to higher stress than another area of the vehicle seat structural member and a reinforcement member attached to the reinforcement region of the vehicle seat structural member. The reinforcement member includes at least one of structural epoxy, a plastic, a metallic member, and a composite member. The reinforcement member is configured to reinforce the vehicle seat structural member along high stress areas.

### BRIEF DESCRIPTION OF THE DRAWINGS

FIG. 1 is a perspective view of a vehicle according to one embodiment.
FIG. 2 is a perspective view of a vehicle seat that can be disposed in the vehicle of FIG. 1.
FIG. 3A is a perspective, front view of a back frame of a vehicle seat according to one embodiment.
FIG. 3B is a perspective, front view of a back frame of a vehicle seat according to one embodiment.
FIG. 4 is a perspective, front view of a back frame of a vehicle seat according to another embodiment.
FIGS. 5A are perspective, side, and front views, respectively, of the back frame of FIG. 4.
FIGS. 6A-6C are cross-sectional views of the back frame of a vehicle seat with a reinforcing member.
FIG. 7A is a perspective view of a metal cylindrical structure.
FIG. 7B is a close-up view of the metal cylindrical structure of FIG. 7A.
FIG. 8A is a graph of test results of a rear impact analysis of the reinforced back frame.
FIG. 8B is a table of the test results of FIG. 8A.
FIGS. 9A-9B are side and perspective views, respectively, of a reinforced seat with a passenger and a non-reinforced seat with a passenger in a rear impact analysis.
FIGS. 10A-10B are side and front views, respectively, of a reinforced seat and a non-reinforced seat in a rear impact analysis.
FIG. 11 is a perspective, back view of a back frame of a vehicle seat according to one embodiment.
FIG. 12 is a perspective, exploded, back view of a back frame of a vehicle seat according to another embodiment.
FIGS. 13A-13D are cross-sectional views of the back frame being reinforced through indirect resistance heating.
FIG. 14 is a perspective view of the back frame being reinforced through indirect resistance heating.
FIG. 15 is a cross-sectional view of an indirect resistance heating element surrounded by copper to reinforce the back frame according to one embodiment.
FIG. 16 is a perspective view of an indirect resistance heating element.
FIG. 17 is a perspective view of an indirect resistance heating element configured in a standard welding machine.
FIG. 18 is a circuit diagram of the current flowing through the indirect resistance heating element.
FIG. 19 is a perspective view of a testing setup for a specimen.
FIG. 20 is an exemplary graphical depiction of bending test results.

### DETAILED DESCRIPTION

Referring generally to the figures, disclosed herein is a reinforcement system for a vehicle seat structural member and method for reinforcing a vehicle seat structural member, as shown according to exemplary embodiments. The present disclosure relates generally to a reinforcement system for adding strength to a vehicle seat structural member, while minimizing the weight.

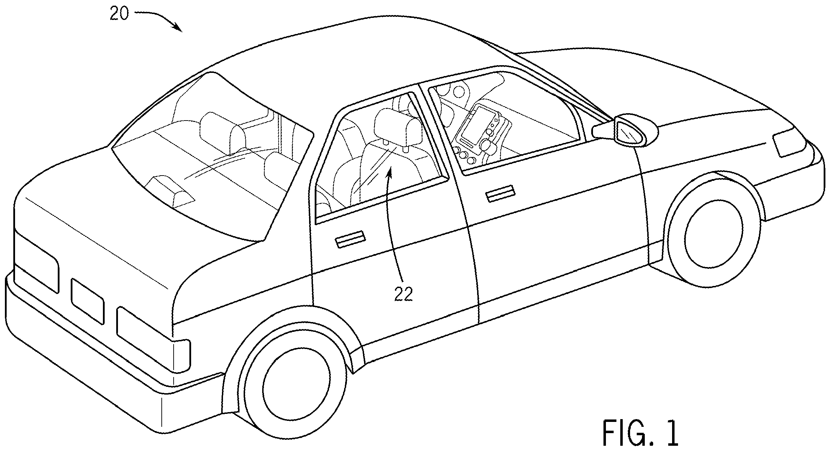

FIG. 1 illustrates an exemplary embodiment in which the reinforcement system may be used in a vehicle 20. The vehicle 20 may include an interior passenger compartment containing a vehicle seat 22 for providing seating to an occupant. Although a four door sedan automobile is shown in FIG. 1, the reinforcement system may be used in a variety of applications, but is particularly useful within a vehicle seat in any type of vehicle, such as a two door or four door automobile, a truck, a SUV, a van, a train, a boat, an airplane, or other suitable vehicular conveyance.

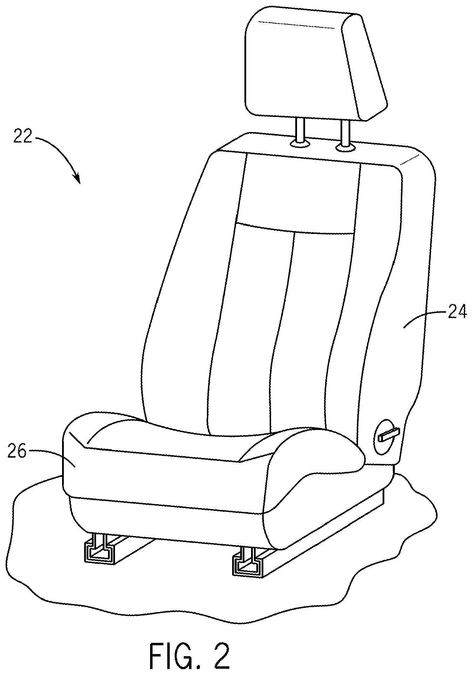

The overall structure of the vehicle seat 22, as shown in FIG. 2, including its structural frame, padding, and covering can be any known seat known in the art. For example, the overall structure of the seat may be, for example, any of the vehicle seats disclosed in U.S. Patent Application Publication Nos. 2012/0032486, 2011/0316317, 2011/0260514, 2011/0080026, 2011/0074199, the above-mentioned 2010/0320816, 2007/0132266, and 2002/0171282 and PCT Application Publication No. WO 2011103501 A3. The vehicle seat 22 may include a seat cushion 24 (with a corresponding seat cushion frame) and a seat back 26 (with a corresponding seat back frame 30).

The vehicle seat 22 and its various components (including the vehicle seat structural member) may be constructed out of a variety of materials including, but not limited to steel, aluminum, composite, and plastic.

The reinforcement system may include a vehicle seat structural part or member and at least one reinforcement part or member 40. The reinforcement member 40 may be attached to the seat structural member through a variety of different methods, as described further herein.

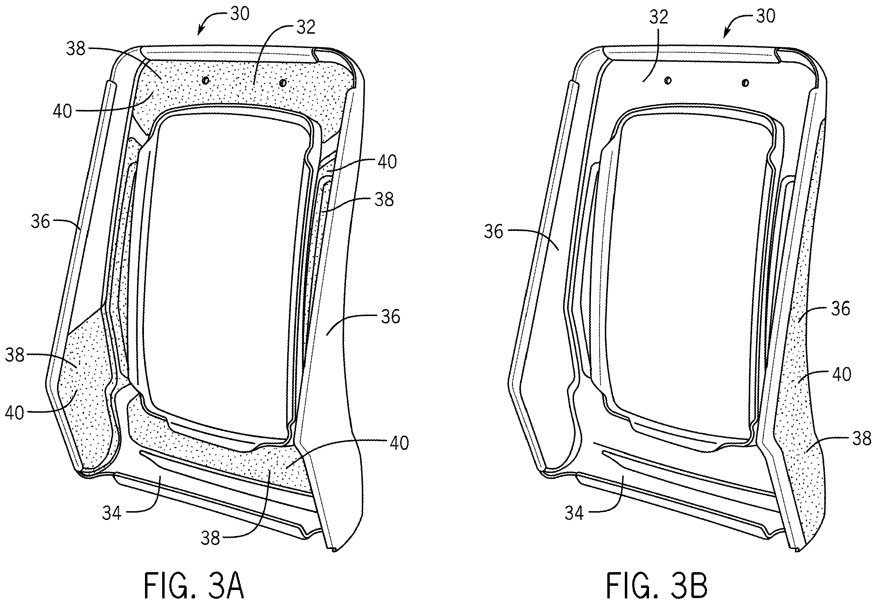

The vehicle seat structural member may be a variety of different components or structures within the vehicle seat 22 that provide structural rigidity and integrity for the vehicle seating including, but not limited to, the load floor of folding vehicle seats (e.g., in the second and third rows of the vehicle), the seat frame (e.g., the seat back frame 30 and/or the seat cushion frame), or other functional and/or aesthetic components that can be reinforced. According to one embodiment, the load floor may be the portion of the folding seat that becomes the floor when the vehicle seat is folded and, therefore, must maintain structural integrity. According to another embodiment, the seat back frame 30 may be an internal, one-piece back frame, as shown in FIG. 3A. Although the seat back frame 30 is referred to in the present application, it is anticipated that the reinforcement system may be used with any of the vehicle seat structural members, according to the desired configuration.

In order to increase the overall strength and stiffness and optimize and improve the performance, strength, and structure of the vehicle seat structural member without needlessly increasing the mass, weight, and volume of the vehicle seat structural member, the vehicle seat structural member may be selectively reinforced along at least one key and specific high stress region or area (e.g., a reinforcement region 38). With the selective reinforcement, the vehicle seat structural member may adequately manage loads or applied forces. This increase in strength may preserve the vehicle seat integrity, improve the overall performance, and prevent failure and deformation of the vehicle seat 22 structure or components, while minimizing the mass, weight, volume, and, therefore, cost.

Consequently, the reinforcement member 40 may enable the wall material of the vehicle seat structural member to be a thinner material, weigh less and use less mass without sacrificing the effective strength of the vehicle seat 22. The reduced part weight of the vehicle seat structural member and the vehicle seat 22 may improve the fuel economy. The added weight of the reinforcement member 40 is negligible compared to the reduced weight of the overall seat 22. Additionally, use of the selective reinforcement and reduction in required materials may reduce the overall cost and the manufacturing cost of the vehicle seat 22 structure and components, while being highly manufacturable. Additionally, providing sufficient structural support with the reinforcement member 40 may abate the vibration of the vehicle seat 22 due to the increase in strength and stiffness.

Accordingly, the reinforcement regions 38 may be positioned to improve the seat performance in specific situations, such as a rearward impact accident. The reinforcement member 40 may improve how the seat 22 performs under certain high stresses in particular directions.

The reinforcement region 38 and, therefore, the reinforcement member 40, may be located anywhere along the surface of the vehicle seat structural member and components. The reinforcement region 38 may be an entire area or section, a pinpointed area, or a thin/weak spot of the vehicle seat structural member that may be reinforced and may be subjected to a higher stress than another area of the vehicle seat structural member, depending on the need. According to the invention, the exact location of the reinforcement region 38 is identified through testing and applying stress to the vehicle seat structural member to mimic crash conditions in order to determine the regions that require extra strength and to optimize the structure and weight of the vehicle seat structural member.

Accordingly, to reinforce the vehicle seat structural member with the reinforcement member 40, the reinforcement member 40 may directly correspond to, attach to, reinforce, and support only the reinforcement regions 38. Other areas that are not considered reinforcement regions 38 may not have a reinforcement member 40 attached to minimize the overall mass, weight, and volume of the vehicle seat structural member.

The seat back frame 30 may include multiple reinforcement areas or regions 38 located in different areas on the seat back frame 30. According to one embodiment as shown in FIG. 3A, the reinforcement regions 38 may be located along an inside region of the seat back frame 30 in order to allow the reinforcement member 40 reinforce under tension, rather than compression. The reinforcement region 38 may be positioned along the upper cross bar or member 32, the lower cross bar or member 34, and the side bar or member 36. Accordingly, the reinforcement member 40 may be attached to and selectively reinforce these reinforcement regions 38. However, it is anticipated that the reinforcement regions 38 may be located in a different area along the seat back frame 30, depending on, for example, the particular configuration of the seat 22 and the stresses on the seat 22. The areas that are not considered reinforcement regions 38 are, accordingly, not reinforced by a reinforcement member 40. According to another embodiment as shown in FIG. 3B, the reinforcement regions 38 may be located along the outside of the seat back frame 30 on a side member 36.

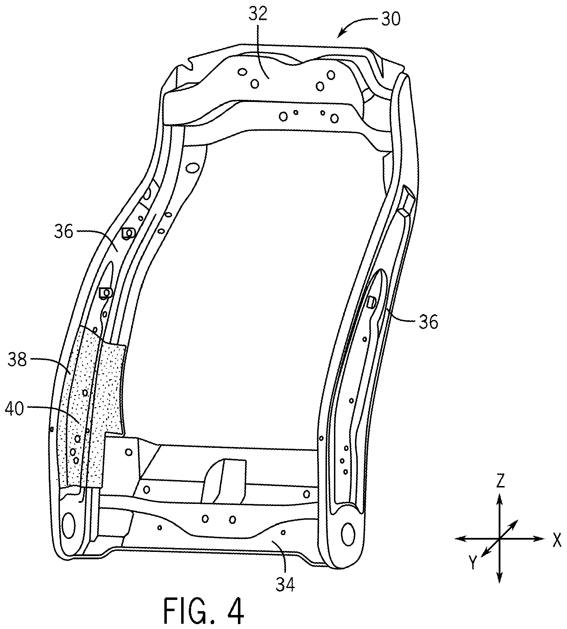

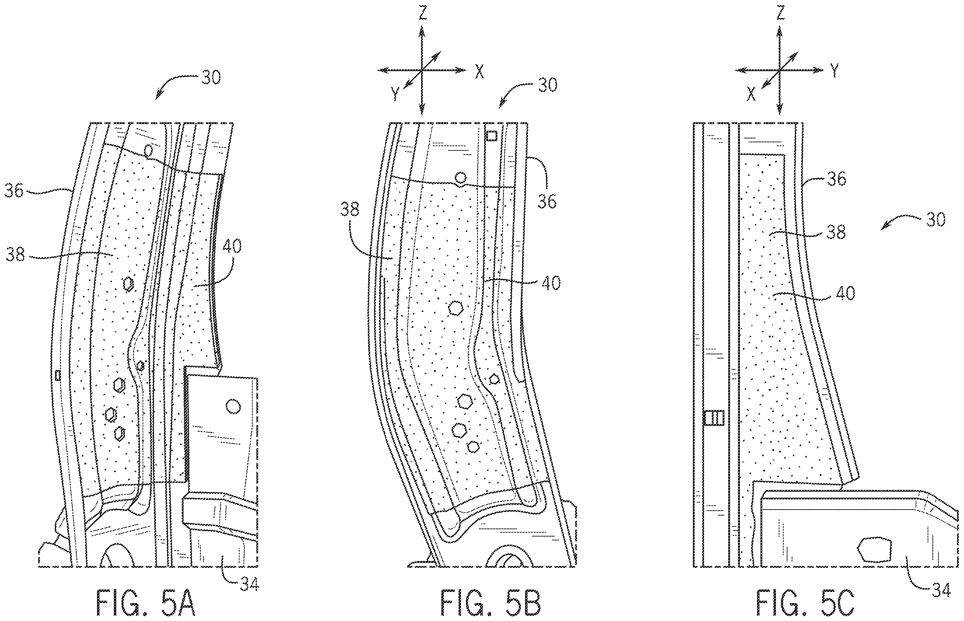

As shown in FIGS. 4 and 5A-5C, the reinforcement region 38 may not extend along the entire length or width of the seat back frame 30 and may be concentrated in a particular area. The reinforcement region 38 may be (and the reinforcement member 40 may accordingly attach to) an inner surface on a lower region of the side member 36 of the seat back frame 30. More specifically, the reinforcement region 38 may extend along a portion of the length of the seat back frame 30 (e.g., along the z-axis) from a portion overlapping the vertical positioning of the lower cross member 34 to a portion above the lower cross member 34 and the recliner mechanism and below the vertical midpoint of the seat back frame 30. Accordingly, the reinforcement region 38 may extend around, lie next to, and share the same vertical position as the lower cross member 34. Alternatively, the reinforcement region 38 may overlap a portion of the lower cross member 34.

The reinforcement region 38 may also extend between the edges of the portion of the side member 36 extending parallel to the x-axis (as shown in FIGS. 4 and 5B). The reinforcement region 38 may further extend between the edges of the portion of the side member 36 extending parallel to the y-axis (as shown in FIGS. 4 and 5C).

To improve the load management methodology, the reinforcement member 40 may include a variety of different materials and may be attached or applied to reinforcement region 38 of the vehicle seat structural member through a variety of different methods, according to the desired configuration. For example, the reinforcement member 40 may include at least one of a structural epoxy, plastic (such as injection-molded plastic), a metallic member, or a composite member, as described further herein. Accordingly, the reinforcement member 40 and the vehicle seat structural member may be a variety of different material combinations with each other, according to the desired configuration. The specific materials used may depend on the desired method of attachment.

According to one embodiment, the reinforcement member 40 may include structural epoxy, such as a structural epoxy 42, as shown in FIGS. 3A-3B, 4, 5A-5C, 6A-6C, and 7. The structural epoxy 42 (such as structural epoxy sealant) may be directly applied or laminated to the vehicle seat structural member for reinforcement. According to one embodiment, the reinforcement member 40 may be constructed out of the Henkel Terocore ® 16301™ material, which is a fiberglass reinforcing layer laminated by an expandable, heat curing epoxy sealant. According to another embodiment, the reinforcement member may be a thermal bond composite or steel and carbon fiber composite.

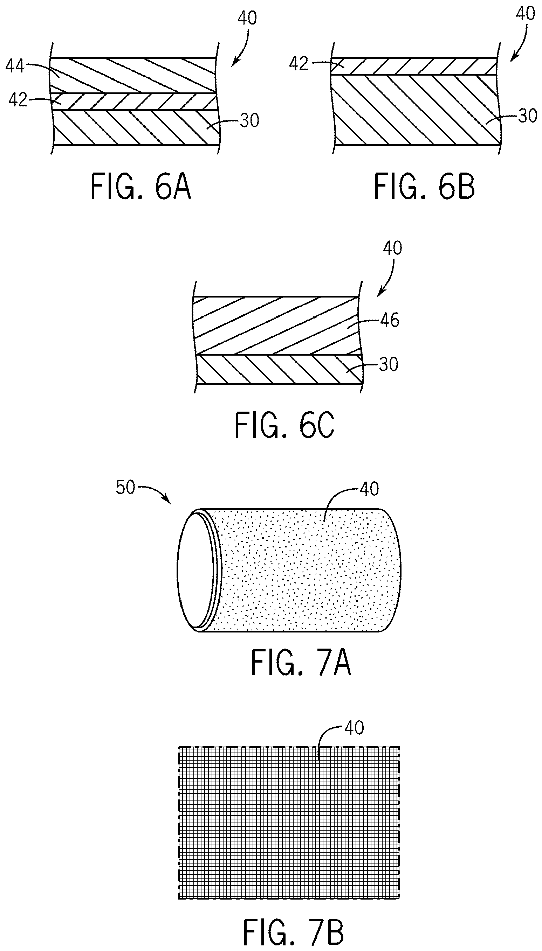

According to one embodiment as shown in FIG. 6A, the reinforcement member 40 may be a layered region comprising two separate and attachable layers on the seat back frame 30: the structural epoxy 42 and a reinforcing or structural layer 44. The structural epoxy 42 may be positioned on either side of the structural layer 44. The structural layer 44 may be a variety of different materials, including, but not limited to fiberglass, composite, and metal.

According to another embodiment as shown in FIG. 6B, the structural epoxy 42 may be directly applied to the back frame 30 without the structural layer 44. The structural epoxy 42 may have reinforcing properties to provide additional support to the back frame 30.

Alternatively, as shown in FIG. 6C, the reinforcement member 40 may comprise the structural epoxy 42 and the structural layer 44 as one composite layer 46, attached to and supporting the back frame 30. The thickness of each of the layers may vary depending on the individual strengths of the layers and the desired outcome of strength, stiffness, and weight. The layers shown in FIGS. 6A-6C may not be drawn proportionally in order to depict the layers.

The reinforcement member 40 may be formed directly on the back frame 30 (and adhered with the structural epoxy) or may be pre-formed and then attached to the back frame 30 by conventional attachment mechanisms, like an epoxy adhesive, welding, thermal bonding, or screws. For example, the fiberglass material may be secured to the back frame 30 with an epoxy adhesive to add strength. Alternatively, metal foils with high strength properties may be secured to the back frame 30 through epoxy or welding (e.g. resistance welding or ultrasonic welding).

The reinforcement member 40 with the structural epoxy 42 may conform to the contours and configuration of the seat back frame 30. As an example of the effectiveness of the reinforcement member 40, FIGS. 7A and 7B depict an example of Henkel Terocore 16301, in which a metal cylindrical structure 50 has a reinforcement member 40 disposed thereon, thereby improving the structural properties of the metal cylindrical structure 50 and preventing any deformation. FIG. 7B shows a close-up view of an example of the surface of the reinforcement member 40, but it is anticipated that the surface may have a variety of different configurations.

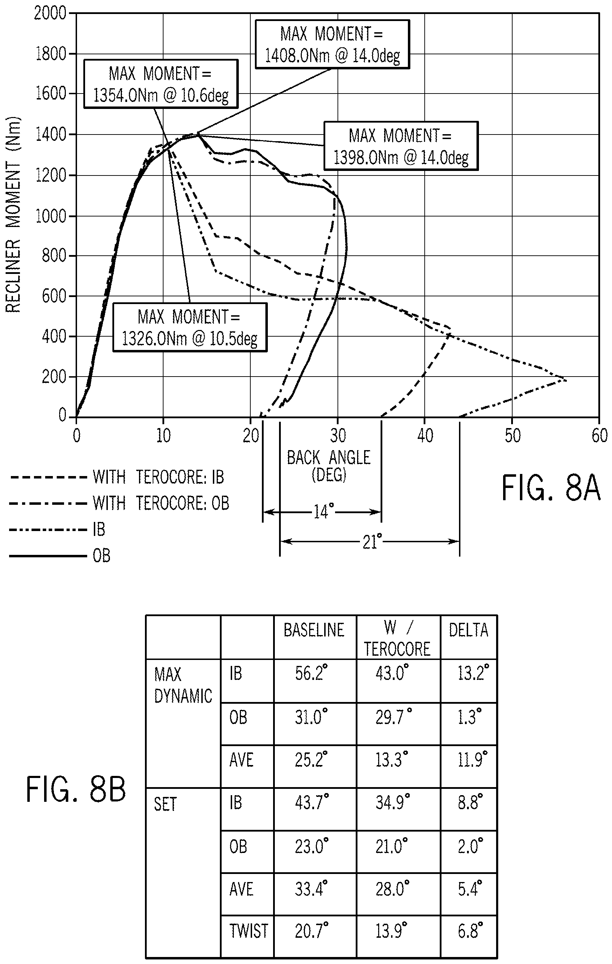

As shown in FIGS. 8A-8B, 9A-9B, and 10A-10B, the seat back frame 30 of FIG. 4 with and without the Henkel Terocore material was tested with rear impact conditions. As shown in the graph in FIG. 8A, the back angle was correlated with the recliner moment. The recliner moment refers to the amount of load applied to the seat back. The back angle refers to the degree of deformation or rotation of the seat back as a result of the recliner moment. The recliner moment was measured on both the inboard ("IB") side and the outboard ("OB") side of both a back frame with reinforcement (i.e., with Terocore) and a back frame without any reinforcement (i.e., the baseline). The inboard side corresponds to the side of the seat back frame closer to the center of the vehicle 22, while the outboard side corresponds to the side of the seat back frame closer to the door of the vehicle 22.

The maximum moment of the inboard side of the seat back with Terocore reinforcement is 1354.0 Nm at 10.6°. The maximum moment of the outboard side of the seat back with Terocore reinforcement is 1408.8 Nm at 14.0°. The maximum moment of the inboard side of the seat back without reinforcement is 1325.0 Nm at 10.5°. The maximum moment of the outboard side of the seat back without reinforcement is 1398.0 Nm at 14.0°. The different in back angle between the inboard side and the outboard side of the seat back with Terocore reinforcement is 14°. The different in back angle between the inboard side and the outboard side of the seat back without reinforcement is 21°.

The quantitative results of the rear impact testing are displayed in FIG. 8B. The maximum dynamic and the set of both sides of both the seat back without reinforcement (the "baseline") and the seat back with reinforcement (i.e., with Terocore) are shown. The maximum dynamic is the maximum back angle of the seat back during the crash testing. The set is a measurement of the back angle of the seatback after the crash impact is complete (e.g., when the recliner moment is zero after the crash testing). The average ("ave") of the inboard side and the outboard side indicates the back angle in the center of the seat back. The twist is the different between the back angle of the outboard side and the inboard side and therefore indicates how unsymmetrical the deformation is as a result of the crash testing. A greater back angle indicates more rotation and deformation along the seat back.

As shown in FIG. 8B, the seat back frame 30 with the reinforcement member 40 has measureable improvements in seat performance compared to the baseline (e.g., with no reinforcement), with a reduced maximum dynamic and a reduced set. By adding reinforcement (e.g., Terocore) to the vehicle seat, the amount of twisting and deformation is reduced along the seat back. For example, both the inboard side and the outboard side of the vehicle seat 22 with reinforcement has less twisting than that of a vehicle seat 12 without reinforcement. Therefore, an occupant 23 in the vehicle seat 22 with reinforcement is also twisted less than the occupant 13 in the vehicle seat 12 without reinforcement.

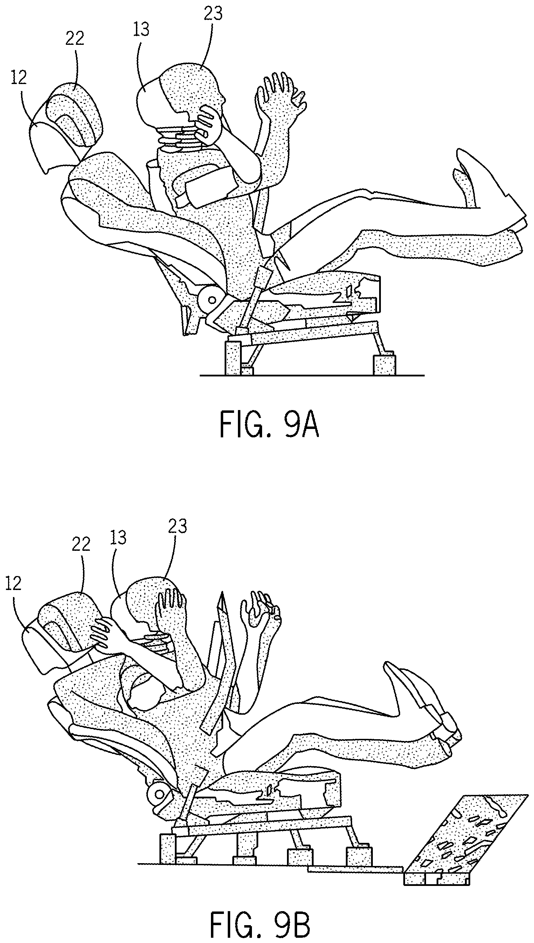

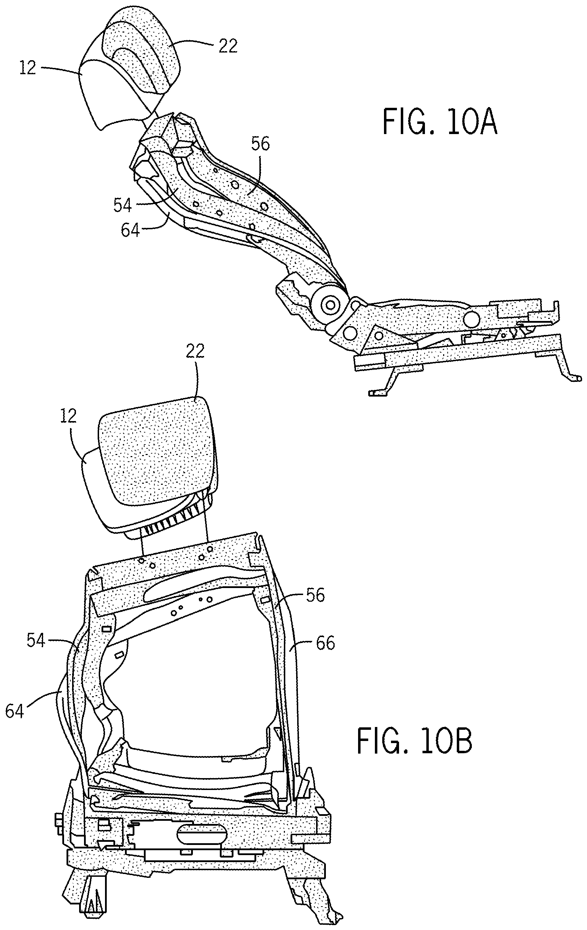

As shown in FIGS. 9A-9B and 10A-10B, a non-reinforced vehicle seat 12 with a passenger 13 is compared to the same vehicle seat 22 with a reinforcement system in a rear impact analysis. As shown, the reinforced seat 22 has better performance than the non-reinforced seat 12. For example, the reinforced seat 22 deforms, bends, and twists less than the non-reinforced seat 12 and is more symmetrical under crash conditions, thus better protecting the passenger 23 within the seat 22, as well as keeping the passenger centered in the seat.

As shown in FIG. 10A, the inboard side 54 of the vehicle seat 22 with reinforcement twists, deforms, and bends less than the inboard side 64 of the vehicle seat 12 without reinforcement. As shown in FIG. 10A-10B, the outboard sides 56 and 66 of both of the vehicle seats 12 and 22 twists less than the inboard sides 54 and 64 of both of the vehicle seats 12 and 22 due to the particular configuration of the seats. The difference in deformation and twisting between the outboard and inboard sides may be due to a variety of different factors, such as the overall structure of the seat or the lower components of the seat (e.g., the track mechanism, the lift mechanism, or the for-aft adjustment mechanism).

Accordingly, the twist and deformation of the seat back is reduced and the performance of the seat back is improved by attaching the reinforcement structure. The degree of allowed twist and overall deformation depends on the desired configuration by the original equipment manufacturer (OEM).

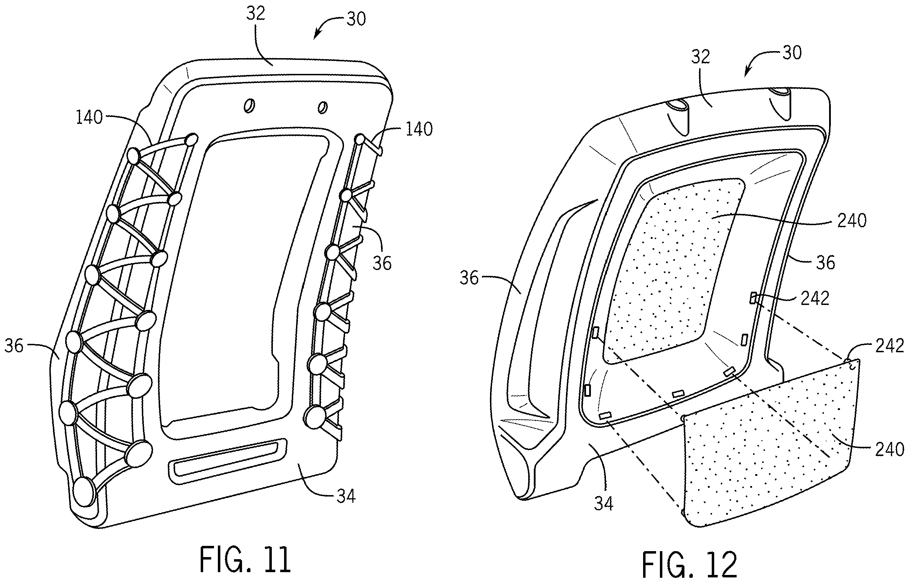

According to another embodiment, the reinforcement member may include an injection-molded plastic (e.g., injection-molded reinforcement parts 140), as shown in FIG. 11. The injection-molded reinforcement parts 140 may reinforce the vehicle seat structural member (e.g., the seat back frame 30) and components. Injection molding may be used to directly bond, mold, or attach injection-molded reinforcement parts 140 onto the back frame 30 in order to reinforce and stiffen thin material sections and high stress areas.

The injection-molded reinforcement parts 140 may be configured in a variety of different shapes and sizes according to optimally reinforce the vehicle seat structural component. According to one embodiment as shown in FIG. 11, the injection-molded reinforcement parts 140 is in a lattice configuration that reduces material consumption while providing additional strength.

Various material combinations may be used with the injection-molded reinforcement parts 140. For example, the injection-molded reinforcement parts 140 may be made of the material provided by the Taiseiplas "NMT" (Nano Molding Technology), in which a patterned indented surface may be created on an aluminum alloy surface, allowing additional components to be attached to various specific locations along the metal surface (e.g., the vehicle seat structural member). The injection-molded reinforcement parts 140 can provide the same reinforcing benefits as the reinforcement member 40.

According to yet another embodiment, the reinforcement member may include a metallic member (e.g., metallic reinforcement parts 240), as shown in FIG. 12. The metallic reinforcement parts 240 may reinforce the vehicle seat structural member (e.g., the seat back frame 30) and components. Welding may be used to directly bond or attach metallic reinforcement parts 240 onto the back frame 30 in order to reinforce and stiffen thin material sections and high stress areas.

Various types of welding may be used to add a reinforcement part 240 to specific locations along the back frame 30. For example, resistance welding or ultrasonic welding may be used to join the metallic reinforcement parts 240 to the back frame 30. Although the metallic reinforcement parts 240 may be made of metal, it is anticipated that another reinforcement part may be constructed out of a different material (e.g., plastic) and welded to the back frame 30. The metallic reinforcement part 240 can provide the same reinforcing benefits as the reinforcement member 40 and the injection-molded reinforcement part 140.

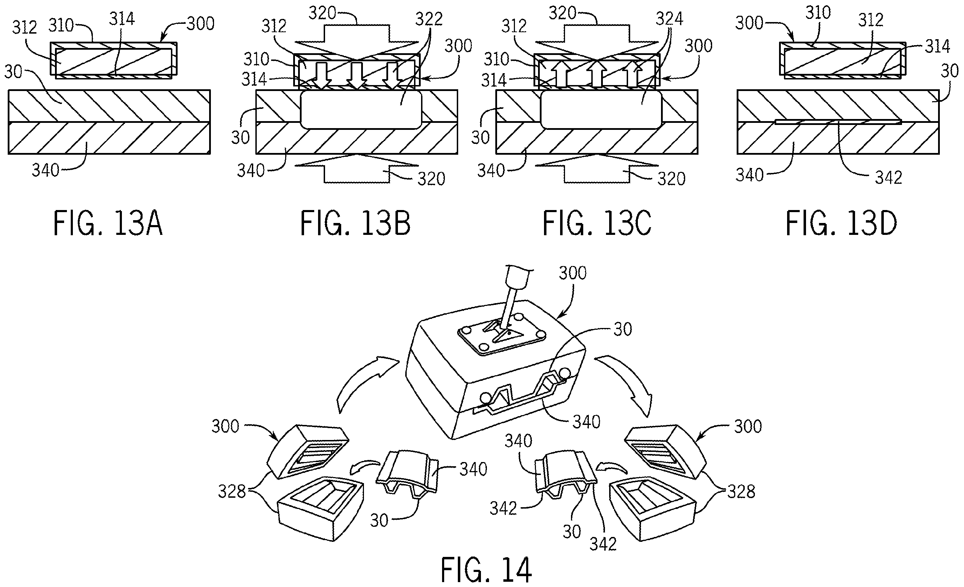

According to still another embodiment, the reinforcement member 40 may include a composite reinforcement part or member 340, as shown in FIGS. 13A-18. The composite reinforcement part 340 may reinforce the vehicle seat structural member (e.g., the seat back frame 30) and components. Indirect resistance heating may be used to directly bond or attach composite reinforcement part 340 onto the back frame 30 in order to reinforce and stiffen thin material sections and high stress areas. Thermal bonding, through indirect resistance heating as described in patent application No. PCT/US2013/59920, may be used to attain selective hardening to reinforce the vehicle seat 22.

FIGS. 13A-13D depict the process of thermal bonding through indirect resistance heating, in which heat 322 is applied through an indirect resistance heating element 300 to the back frame 30. The back frame 30 is at least touching a composite reinforcement part 340. The heat 322 transfers through the back frame 30, melts the composite reinforcement part 340, and bonds the composite reinforcement part 340 to the back frame 30, thus creating a bonded area 342 between the components. The heating element 300 (and therefore the heat 322) only needs to be applied to one side of the elements to be bonded (i.e. to the back frame 30). Due to the thermal conductivity of the materials, the system may be cooled 324 by drawing the heat 322 back out of the system after the heat 322 has been applied to the system.

The back frame 30 and the composite reinforcement part 340 may be selectively attached with the indirect resistance heating according to the desired configuration or attachment. The bonded area 342 (i.e. the bonded joint) results with the portions of the composite reinforcement part 340 that are within the direct line of applied heat 322 and interface with the back frame 30. These portions are melted and bonded to the back frame 30, while the other portions of the composite reinforcement part 340 remain intact and unattached to the back frame 30, thus achieving selective reinforcement.

The heating element 300 may apply sufficient heat to reach or surpass the melting point of the composite reinforcement part 340. For example, 250° C may be applied to the back frame 30 to melt and bond the composite reinforcement part 340 to the back frame 30. The heating and cooling may take place over a relatively short time period, such as about 0.3 seconds (the heating element 300 may reach the desired temperature within about 0.05 seconds and reach a steady state temperature within 0.30 seconds per 1mm gauge). Pressure 320 may additionally be applied during the process to insure proper bonding between the back frame 30 and the composite reinforcement part 340.

For the indirect resistance heating, a variety of materials may be used. For example, the back frame 30 may be a metal (such as steel (i.e. HSLA, dual phase, and TWIP) or stainless steel, aluminum, or magnesium grades) and the composite reinforcement part 340 may be a composite material (such as a thermoplastic material (i.e. PA6 with glass fibers) or carbon fiber). The surfaces between the back frame 30 and the composite reinforcement part 340 may optionally be treated to enhance the bonding. For example, a surface treatment, texturing, and/or coating may be applied. More specifically, phosphate coatings, nano surface treatment, Surfi-Sculpt™ process, and/or laser surface texturing may be used on the back frame 30. An adhesive is not required between the back frame 30 and the composite reinforcement part 340.

FIG. 14 depicts the back frame 30 bonding with the composite reinforcement part 340 through indirect resistance heating. The back frame 30 and the composite reinforcement part 340 are placed within a heating press tool 328. One side of the heating press tool 328 is the heating element 300. The back frame 30 is sandwiched between the heating element 300 and the composite reinforcement part 340. As the heating element 300 is heated and then cooled, pressure is applied by the heating press tool 328 to the back frame 30 and the composite reinforcement part 340 to insure proper bonding.

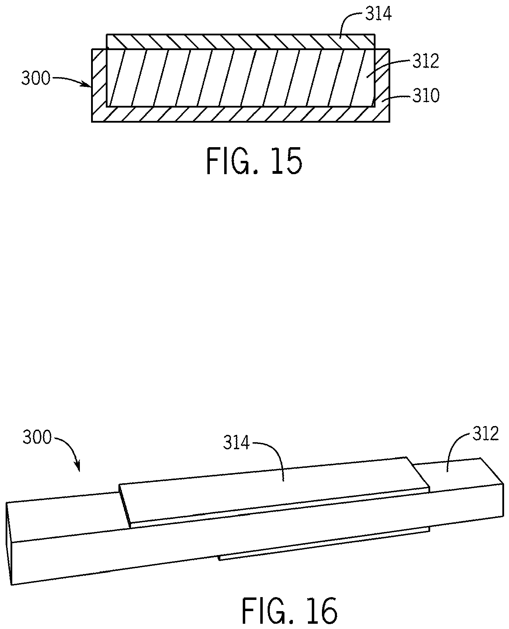

FIG. 15 depicts the indirect resistance heating element 300. The heating element 300 may include a conductive material, such as copper 310, a heating material 312, and a thermal coating 314. The copper 310 may at least partially encompass the outside of the heating elements 300 and be exposed to a heat source, such as an electrical current. The heating material 312 may be at least partially recessed within or attached to the top of the copper 310. The thermal coating 314 may at least partially rest on top of the heating material 312. Alternatively, the thermal coating 314 may be thermally sprayed onto the heating material 312. The back frame 30 may be in direct contact with the thermal coating 314. The thermal coating 314 may increase the contact between the heating material 312 and the back frame 30, allow heat to transfer into the back frame 30, provide uniformity in the heating process, provide electrical insulation, and prevent the system from shorting. FIG. 16 depicts the indirect resistance heating element 300 without the copper 310 covering.

The thermal coating 314 may be a thermal conductivity ceramic, such as a plasma spray coating of 10% aluminum nitride (AIN) distributed in a Yttrium Stablized Zirconia (YSZ) matrix. The heating material may be TZM molybdenum. TZM molybdenum is an alloy of molybdenum with 0.50% titanium, 0.08% zirconium, and 0.02% carbon.

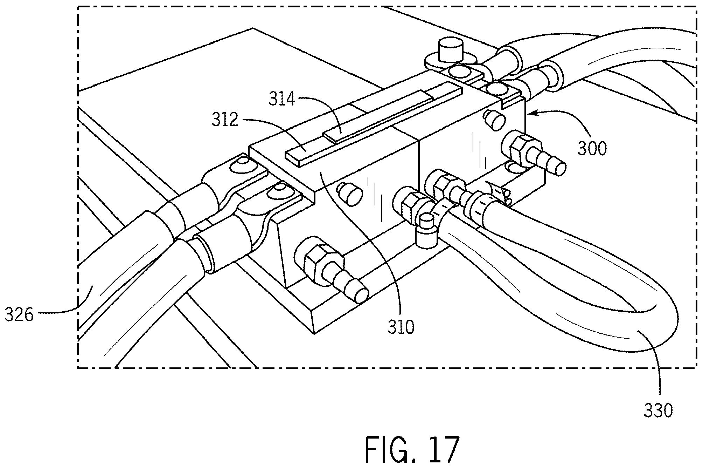

FIG. 17 depicts the indirect resistance heating element within a standard welding machine. A power supply 326 may be connected to the copper 310 to apply a current through and heat the copper 310. The heat 322 is transferred to the heating material 312 and subsequently through the thermal coating 314 and into the back frame 30 and the composite reinforcement part 340. Cooling tubes 330 draw heat out of the system and prevent overheating.

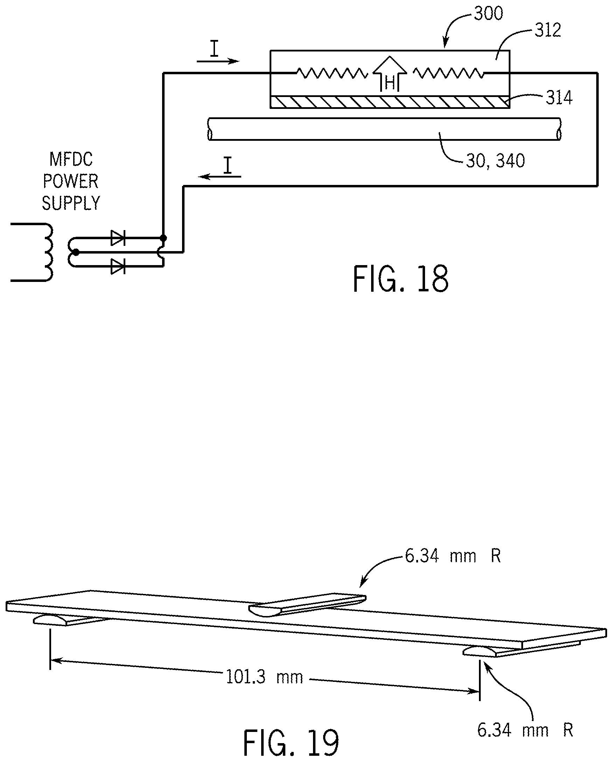

FIG. 18 depicts an electrical and thermal schematic of the current flowing from the MFDC power supply 326 and through the upper heating element 300 with the thermal coating 314 or electrical insulation over the workpiece (e.g., the back frame 30 and the composite reinforcement part 340). This system heats the back frame 30 that is connected to the composite reinforcement part 340 and subsequently melts the composite reinforcement part 340 to the back frame 30.

FIG. 19 depicts a physical testing setup to compare reinforced specimens to bare specimens. More specifically, FIG. 19 depicts a three-point bending test. Loads 72 are placed on either side of the specimen 70 to bend the specimen 70 and thus test the physical strength of the specimen 70. The specimen 70 is either bare or includes a reinforcement layer, such as reinforcement members 40, 140, 240, or 340. By way of example, the specimen 70 in FIG. 19 is a steel sheet.

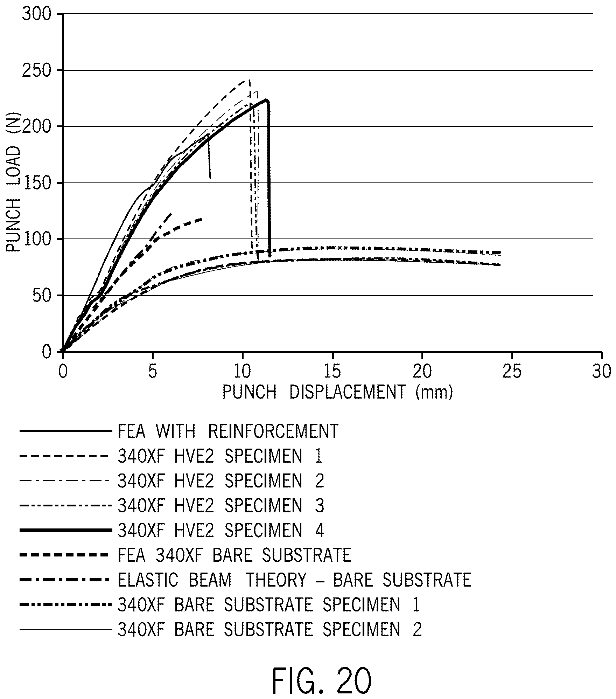

FIG. 20 depicts a graph of exemplary 340XF bending test results of the physical testing setup of FIG. 19 comparing the strengths of unreinforced material and reinforce material (e.g. material reinforced with technology from Henkel). The punch displacement (in millimeters) is correlated with the punch load (in Newtons). As shown by the graph, the bare specimens 80 are not able to maintain the same punch load as the reinforced specimens 82. For example, in order for the bare steel specimen to have the same stiffness as the reinforced steel specimen, the bare steel would have to be 1.2 mm thick (instead of 1 mm thick), and therefore also heavier. The peak load of the bare steel would only be 122N (instead of 223N) and have a normalized mass of 9.36 kg/m³ (instead of 8.71 kg/m³).

In order for the bare steel specimen to have the same peak load as the reinforced steel specimen, the bare steel would have to be 1.62 mm thick (instead of 1 mm thick), also increasing the heaviness. The normalized mass of this bare steel would be 12.6 kg/m³ (instead of 8.71 kg/m³). Therefore, reinforced steel performs better and weighs less than bare steel. Thus, it would be beneficial to have the back frame 30 with the reinforcement members 40 or reinforcement parts 140, 240, or 340 to increase the overall strength and minimize the overall weight, as well as to add components and features to the vehicle seat 22.

According to yet another embodiment and in addition to the structural reinforcement, load distribution, and the weight reduction, the reinforcement members may enable additional seat components to attach to the vehicle seat structural member. For example, additional features, components, or attachments may be added or incorporated with the reinforcement members 40, 140, 240, or 340 into the back frame 30 with the attachment methods described further herein. These features may be aesthetic and/or functional, thereby improving the craftsmanship of the back frame 30 and reducing the required part assembly. For example, attachment features may be added to enable the attachment of seat features to the surface of the vehicle seat 22. As shown in FIG. 12, for example, plastic attachment features may be attached to specific locations along the surface of the back frame 30. More specifically, additional features and components 242 for a map pocket may be integrated into the back frame 30. Alternatively or additionally, trim attachments, such as J-hooks, to attach a seat fabric material or covering to the vehicle seat structure may be integrated into the back frame 30. This may decrease the required assembly and decrease the required seat fabric material.

## Claims

1. A method of reinforcing a vehicle seat structural member that is a component of a vehicle seat providing structural integrity for the vehicle seat in the event of a crash comprising:
identifying a reinforcement region (38) of the vehicle seat structural member based on an area of the vehicle seat structural member that will be subjected to higher operational stress in the event of a crash than another area of the vehicle seat structural member by testing and applying stress to the vehicle seat structural member to mimic crash conditions; and
attaching a reinforcement member (40, 140, 240, 340) only to the reinforcement region (38) of the vehicle seat structural member and not to other areas of the vehicle seat structural member,
wherein the reinforcement member (40, 140, 240, 340) includes at least one of structural epoxy, a plastic, a metallic member, and a composite member,
wherein the reinforcement member (40, 140, 240, 340) is configured to reinforce the vehicle seat structural member in the reinforcement region (38).

2. The method of claim 1, wherein the reinforcement member (40) is structural epoxy, and the structural epoxy is directly applied to the vehicle seat structural member.

3. The method of claim 1, wherein the reinforcement member (140) is plastic, and the plastic is injection-molded on the vehicle seat structural member.

4. The method of claim 1, wherein the reinforcement member (240) is a metallic member, and the metallic member is attached to the vehicle seat structural member by welding.

5. The method of claim 1, wherein the reinforcement member (340) is a composite member, and the composite member is attached to the vehicle seat structural member by indirect resistance heating that selectively hardens the reinforcement member (340) on the vehicle seat structural member.

6. The method of claim 1, wherein the reinforcement region (38) is a layered region formed by creating layers on an inner surface of a side member of the vehicle seat structural member.

7. The method of claim 1 wherein the reinforcement member (40) includes a structural epoxy and a structural layer.

8. The method of claim 1, wherein the reinforcement member (340) is a composite layer including a structural layer and a structural epoxy.

9. The method of claim 1, wherein the reinforcement member (40, 140, 240, 340) has a lattice configuration.

10. The method of claim 1, wherein the reinforcement member (40, 140, 240, 340) is configured to enable additional seat components to attach to the vehicle seat structural member.

11. The method of claim 1, wherein the vehicle seat structural member is one of a seat frame and a load floor of folding vehicle seats.

## Patentansprüche

1. Verfahren zum Verstärken eines Fahrzeugsitz-Bauelements, das eine Komponente eines Fahrzeugsitzes ist, die dem Fahrzeugsitz im Falle eines Unfalls Strukturintegrität bereitstellt, umfassend:
Identifizieren einer Verstärkungsregion (38) des Fahrzeugsitz-Bauelements, die auf einem Bereich des Fahrzeugsitz-Bauelements basiert, das im Falle eines Unfalls einer höheren Betriebsbeanspruchung ausgesetzt ist als ein anderer Bereich des Fahrzeugsitz-Bauelements durch Testen und Anlegen von Spannung an das Fahrzeugsitz-Bauelement beim Nachahmen von Unfallbedingungen; und
Befestigen eines Verstärkungselements (40, 140, 240, 340) nur an der Verstärkungsregion (38) des Fahrzeugsitz-Bauelements und nicht an anderen Bereichen des Fahrzeugsitz-Bauelements,
wobei das Verstärkungselement (40, 140, 240, 340) mindestens eines von einem Struktur-Epoxid, einem Kunststoff, einem metallischen Element und einem Verbundelement aufweist,
wobei das Verstärkungselement (40, 140, 240, 340) konfiguriert ist, um das Fahrzeugsitz-Bauelement in der Verstärkungsregion (38) zu verstärken.

2. Verfahren nach Anspruch 1, wobei das Verstärkungselement (40) ein Struktur-Epoxid ist und das Struktur-Epoxid direkt auf das Fahrzeugsitz-Bauelement aufgebracht wird.

3. Verfahren nach Anspruch 1, wobei das Verstärkungselement (140) ein Kunststoff ist und der Kunststoff per Spritzguss auf das Fahrzeugsitz-Bauelement aufgebracht wird.

4. Verfahren nach Anspruch 1, wobei das Verstärkungselement (240) ein metallisches Element ist und dass metallische Element per Schweißen an dem Fahrzeugsitz-Bauelement befestigt wird.

5. Verfahren nach Anspruch 1, wobei das Verstärkungselement (340) ein Verbundelement ist und das Verbundelement an dem Fahrzeugsitz-Bauelement durch indirekte Widerstandserwärmung befestigt wird, die das Verstärkungselement (340) selektiv an dem Fahrzeugsitz-Bauelement härtet.

6. Verfahren nach Anspruch 1, wobei die Verstärkungsregion (38) eine geschichtete Region ist, die durch Erzeugen von Schichten auf einer inneren Oberfläche eines Seitenelements des Fahrzeugsitz-Bauelements gebildet wird.

7. Verfahren nach Anspruch 1, wobei das Verstärkungselement (40) ein Struktur-Epoxid und eine Strukturschicht aufweist.

8. Verfahren nach Anspruch 1, wobei das Verstärkungselement (340) eine Verbundschicht aufweist, die eine Strukturschicht und ein Struktur-Epoxid aufweist.

9. Verfahren nach Anspruch 1, wobei das Verstärkungselement (40, 140, 240, 340) eine Gerüstkonfiguration aufweist.

10. Verfahren nach Anspruch 1, wobei das Verstärkungselement (40, 140, 240, 340) konfiguriert ist, damit zusätzliche Sitzkomponenten an dem Fahrzeugsitz-Bauelement befestigt werden können.

11. Verfahren nach Anspruch 1, wobei das Fahrzeugsitz-Bauelement eines von einem Sitzrahmen und einer Ladefläche der Klappfahrzeugsitze ist.

## Revendications

1. Procédé de renforcement d'un élément structurel de siège de véhicule, qui est un composant d'un siège de véhicule assurant une intégrité structurelle pour le siège de véhicule dans le cas d'un accident, consistant :
à identifier une région de renforcement (38) de l'élément structurel de siège de véhicule, en se basant sur une partie de l'élément structurel de siège de véhicule qui sera soumise à une contrainte fonctionnelle plus importante dans le cas d'un accident qu'une autre partie de l'élément structurel de siège de véhicule, en testant et en appliquant une contrainte à l'élément structurel de siège de véhicule pour reproduire des conditions d'accident ;
à fixer un élément de renforcement (40, 140, 240, 340) seulement à la région de renforcement (38) de l'élément structurel de siège de véhicule et pas à d'autres parties de l'élément de renforcement,
dans lequel l'élément de renforcement (40, 140, 240, 340) comprend une résine époxy et/ou une matière plastique et/ou un élément métallique et/ou un élément composite,
dans lequel l'élément de renforcement (40, 140, 240, 340) est configuré pour renforcer l'élément structurel de siège de véhicule dans la région de renforcement (38).

2. Procédé selon la revendication 1, dans lequel l'élément de renforcement (40) est une résine époxy structurelle, la résine époxy structurelle est directement appliquée à l'élément structurel de siège de véhicule.

3. Procédé selon la revendication 1, dans lequel l'élément de renforcement (140) est une matière plastique et la matière plastique est moulée par injection sur l'élément structurel de siège de véhicule.

4. Procédé selon la revendication 1, dans lequel l'élément de renforcement (240) est un élément métallique et l'élément métallique est fixé à l'élément structurel de siège de véhicule par soudage.

5. Procédé selon la revendication 1, dans lequel l'élément de renforcement (340) est un élément composite et l'élément composite est fixé à l'élément structurel de siège de véhicule par un chauffage indirect par résistance qui durcit de façon sélective l'élément de renforcement (340) sur l'élément structurel de siège de véhicule.

6. Procédé selon la revendication 1, dans lequel l'élément de renforcement (38) est une région stratifiée formée en créant des couches sur une surface interne d'un élément latéral de l'élément structurel de siège de véhicule.

7. Procédé selon la revendication 1, dans lequel l'élément de renforcement (40) comprend une résine époxy structurelle et une couche structurelle.

8. Procédé selon la revendication 1, dans lequel l'élément de renforcement (340) est une couche composite comprenant une couche structurelle et une résine époxy structurelle.

9. Procédé selon la revendication 1, dans lequel l'élément de renforcement (40, 140, 240, 340) présente une configuration en treillis.

10. Procédé selon la revendication 1, dans lequel l'élément de renforcement (40, 140, 240, 340) est configuré pour permettre à des composants de siège supplémentaires d'être fixés à l'élément structurel de siège de véhicule.

11. Procédé selon la revendication 1, dans lequel l'élément structurel de siège de véhicule est une armature de siège et/ou un plancher de chargement de sièges de véhicule pliants.
